# EUROPEAN PATENT SPECIFICATION

(11) **EP 2 140 828 B1**
(45) Date of publication and mention of the grant of the patent: **31.08.2016**
(21) Application number: 09251717.6
(22) Date of filing: 03.07.2009
(51) Int. Cl.: A61C 5/02

(54) **Dental file with improved tip configuration**
Zahnfeile mit verbesserter Spitzenkonfiguration
Lime dentaire dotée d'une configuration de pointe améliorée

(30) Priority: 03.07.2008 US 167905
(43) Date of publication of application: 06.01.2010
(73) Proprietor: Johnson, William B., Tulsa, OK 74136 (US)
(72) Inventor: Johnson, William B., Tulsa, OK 74136 (US)
(74) Representative: Boult Wade Tennant

(56) References cited:
- US-A1- 2006 008 766
- US-A1- 2007 184 406

## Description

### REFERENCE TO PENDING APPLICATIONS

This application is not based upon any pending domestic or international patent applications.

### BACKGROUND OF THE INVENTION

### 1. Field of the Invention.

This invention relates generally to the field of dentistry and more particularly to endodontic files or reamers used in the cleaning of material present in the root canal of human teeth and for enlarging and shaping the root canal so that it is prepared for receiving filling material.

### 2. Description of the Related Art.

A relatively common but yet difficult procedure is that of cleaning, shaping, and filling the root canal of a patient's tooth. In the performance of the typical root canal procedure, a hole is first drilled in the crown or the exposed portion of the tooth. The hole drilled through the crown provides access to the interior of the tooth and specifically access to the tooth root canal or root canals. In order to treat the tooth, the canal or canals must be thoroughly cleaned of pulpal material that, in the case of an abscessed tooth, is typically infected. The clinician must remove this pulpal material to alleviate the infection. Next, the clinician must clean and shape the root canal so that it can be effectively filled with a filler material, such as gutta percha.

Much work has been done on the instrumentation needed for effective cleaning, shaping, and filling of a tooth root canal. One such instrument, the endodontic file, is an elongated device insertable into the root canal and manipulated either manually or by machine to clean and shape the root canal. The file removes pulpal material from the interior of the tooth and enlarges and shapes the root canal so that it can be more effectively filled with a filler material.

Because root canal paths vary in their geometry and topography, the clinician must choose the appropriate file to precisely control the preparation shape, length, and width of the canal. Prior art endodontic files, however, generally include tip configurations that have face surfaces which engage a relatively large contact area in comparison to the cross-sectional area of the file. The large contact area of the tip unnecessarily produces resistance that may cause file breakage. As the large contact area encounters various surface irregularities and projections, progression of the file as it is rotated into the root canal is impeded. Because almost all of the cutting or scraping occurs at the periphery of the file, these face surfaces may be significantly reduced and yet still provide a file that produces the desired shape of the canal. Therefore, a need exists for a file having a tip configuration with a reduced cross-sectional contact area of the face surfaces.

US-A-2007/0184406 discloses a fluted endodontic file having a shank portion and a generally elongated working portion. The working portion generally includes cutting or abrading features, such as helical flutes with helical lands therebetween, adapted upon rotation and/or reciprocation for the instrument to cut, abrade, or remove tissue from the interior walls of a root canal or dentine and/or enamel from the external tooth wall. The working portion extends from a proximal end adjacent the shank portion to a distal end terminating at a tip portion.

US-A-2006/0008766 discloses an endodontic file comprising a handle and a shaft extending between a distal end and a proximal end and having a periphery surface. The shaft may be slightly tapered toward the distal end. A portion of the periphery surface forms an abrading segment which may comprise a triangular or any polygonal cross-section having corners forming helical cutting edges. In one embodiment, one or more flutes formed in the abrading segment may form helical cutting edges.

### BRIEF SUMMARY OF THE INVENTION

The invention provides a dental instrument for cleaning and shaping a root canal of a tooth comprising:
a longitudinal body having a taper, a central axis of rotation, a plurality of helical-shaped flutes with spiraled lands therebetween, and a guide tip;
said guide tip having a plurality of face surfaces; a first face surface of said plurality of face surfaces lying substantially contiguous to a lateral surface of a conical-shaped envelope, and a portion of a second face surface of said plurality of surfaces lying noncontiguous to a lateral surface of said conical-shaped envelope; and
wherein said first and second face surfaces intersect to form a guide point at an apex of said guide tip, said guide tip being coaxial with said central axis of rotation.

A dental instrument for enlarging a root canal of a tooth includes a longitudinal body having a central axis of rotation, three helical-shaped flutes, and a guide tip having a reduced area of contact. In a preferred embodiment, the guide tip is defined by a conical-shaped envelope coaxial with the longitudinal body and has three face surfaces. Each of the first and third surfaces lies substantially contiguous to an opposing lateral surface of the conical-shaped envelope.

A portion of the guide tip is removed so that a portion of the second surface is noncontiguous to an opposing lateral surface of the conical-shaped envelope. The removed portion of the guide tip may be defined by a radius "r" to give the second surface an arcuate-shaped profile. Radius "r" should not extend past the central longitudinal axis of the file in order to keep the apex of the guide tip centered. In another preferred embodiment, the removed portion of the guide tip is defined by an angle "α". In yet another preferred embodiment, the removed portion of the guide tip is further defined by an angle "β".

The dental instrument may also include a plurality of helical-shaped flutes and a guide tip having a plurality of face surfaces, at least one of which has a reduced area of contact. The face surface having the reduced area of contact may be defined by a radius "r", an angle "α", an angle "β", or some combination of radius "r" and angles "α" and "β". A portion of the face surface having the reduced area of contact does not lie contiguous to an opposing lateral surface of the conical-shaped envelope defining the tip. A portion of the other faces surfaces, however, remain contiguous to the envelope. The conical-shaped envelope defining the tip is coaxial to the central longitudinal axis of the instrument and, therefore, shares an apex of at least one of the face surfaces.

A better understanding of the invention will be obtained from the following detailed description of the preferred embodiments and claims, taken in conjunction with the attached drawings.

### BRIEF DESCRIPTION OF THE DRAWINGS

Figure 1 is a view of an endodontic file configured for manual manipulation by an endodontic practitioner. The file is tapered from its proximal end to its distal end and has a tip portion at the distal end.
Figure 2 is a view of the tip portion of the endodontic file. One face surface of the tip has an arcuate-shaped portion removed as defined by radius "r".
Figure 2A is a cross-sectional view taken along section line 2A-2A of Figure 2. The tip includes two triangular-shaped faces intersecting to form the center guide point of the tip. Each of the two faces is contiguous to an opposing lateral surface of a conical-shaped envelope defining the tip. The arcuate-shaped portion of the third face, however, is non-contiguous to an opposing lateral surface of the conical-shaped envelope.
Figure 3 is a view of the file of Figure 2 taken along section line 3-3 of Figure 2.
Figure 4 is a view of an endodontic file with one face of the tip having a more acute angle relative to the central longitudinal axis of the file than the other two faces. Because the first face does not extend past the central longitudinal axis of the file, the three face surfaces intersect to form a single guide point at the center of the tip.
Figure 5 is a view of an endodontic file having a tip with a wedge-shaped portion removed from the tip.
Figure 5A is a cross-sectional view taken along section line 5A-5A of Figure 5. Two asymmetrical triangular-shaped faces intersect to form a single guide point at the center of the tip.

### DETAILED DESCRIPTION OF THE PREFERRED EMBODIMENTS

Preferred embodiments of an endodontic file having an improved tip configuration will now be described with reference to the drawings. Elements illustrated in the drawings are identified by the following numbers:

| | | | |
|---|---|---|---|
| 10 | Endodontic file | 24 | Second flute |
| 12 | Handle portion | 26 | Third flute |
| 14 | Proximal end | 30 | Tip portion |
| 16 | Distal end | 32 | First surface |
| 18 | Shank working portion | 34 | Second surface |
| 20 | Central longitudinal axis | 36 | Third surface |
| 22 | First flute | 38 | Portion removed |
| | | 40 | Conical-shaped envelope |

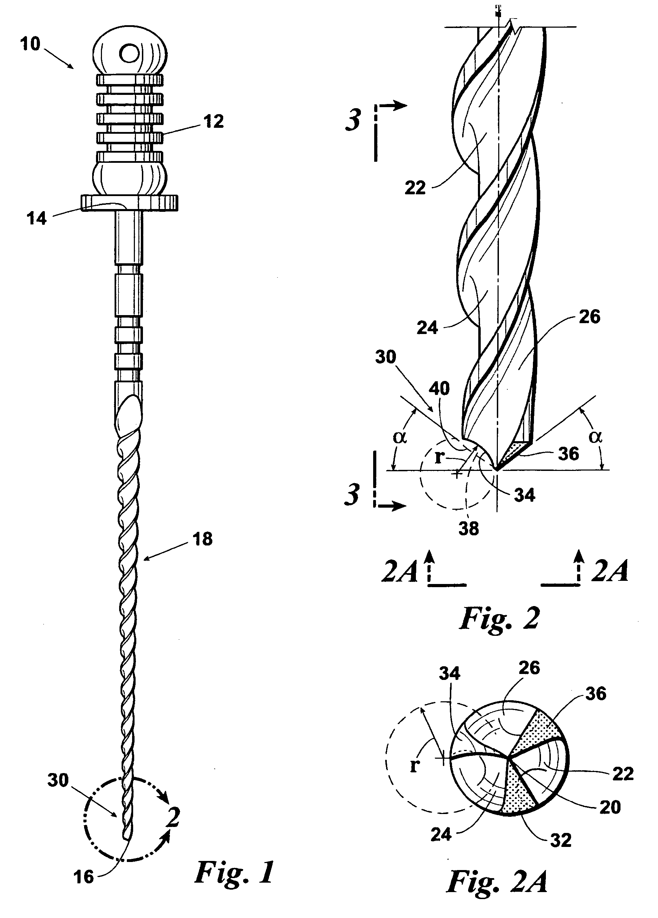

Referring to the drawings and first to Figures 1, an endodontic file 10 includes a handle portion 12 located at a proximal end 14 of the file with an elongated shaft working portion 18 located between proximal end 14 and distal end 16. Handle 12 is typically a small plastic handle portion configured for manual manipulation. Handle 12 may be replaced by a chuck stem (not shown) integrally formed with file 10 and configured to be received in a chuck (not shown) for mechanical manipulation. Working portion 18 includes three helical-shaped flutes 22, 24, 26 with spiraled lands therebetween. File 10 is tapered along its length so that distal end 16 is preferably of a substantially reduced diameter compared to the proximal end 14. A tip portion 30 lies at distal end 16.

Referring to Figures 2 to 3, tip portion 30 is defined by a conical-shaped envelope having its apex located coaxial the central longitudinal axis 20 of file 10. The envelope is generally indicated by numeral 40. Two substantially identical, flat triangular-shaped face surfaces 32, 36 are oriented at an angle "α" relative to a line normal axis 20. Each surface 32, 36 lies substantially contiguous with an opposing lateral surface of the conical-shaped envelope 40. Similar to surfaces 32 and 36, a first portion of surface 34 is oriented at angle "α". Unlike surfaces 32 and 36, a portion 38 of surface 34 is removed, resulting in surface 34 having an arcuate-shape of radius "r". Preferably, removed portion 38 does not extend past the central longitudinal axis 20 of the file 10. The arcuate-shaped portion of surface 34, therefore, is no longer contiguous to the opposing lateral surface of the conical-shaped envelope 40 defining tip 30. Surfaces 32 and 36-along with the non-removed portion of surface 34-intersect to form the apex of tip 30. Surfaces 32, 34, 36 intersect to form the apex of tip 30 and, therefore, the apex of the conical-shaped envelope 40.

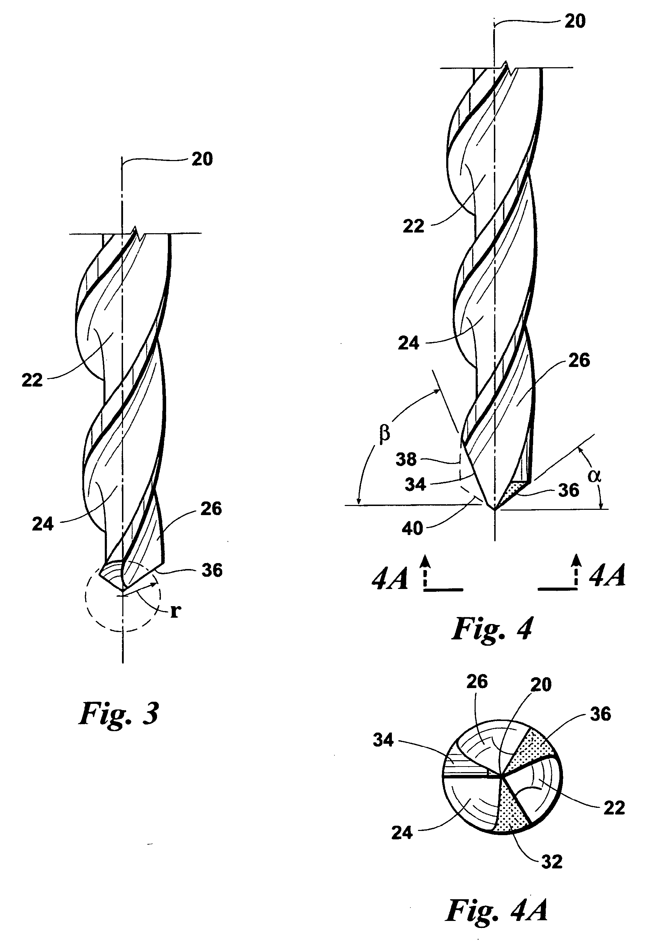

Figures 4 and 4A illustrate surface 34 having a portion of surface 34 formed by an angle "β" relative to a line normal axis 20. Preferably, removed portion 38 does not extend past the central longitudinal axis 20 of the file 10. Angle "β" is preferably greater than the angle "α" of surfaces 32 and 36. Surfaces 32 and 36 remain substantially triangular in shape and intersect to form a guide tip point at center 20. Each surface 32, 36 also remains contiguous to the opposing lateral surface of the conical-shaped envelope 40 defining the original tip 30 but no portion of surface 34 defined by angle "β" is contiguous to the opposing lateral surface of the conical-shaped envelope 40.

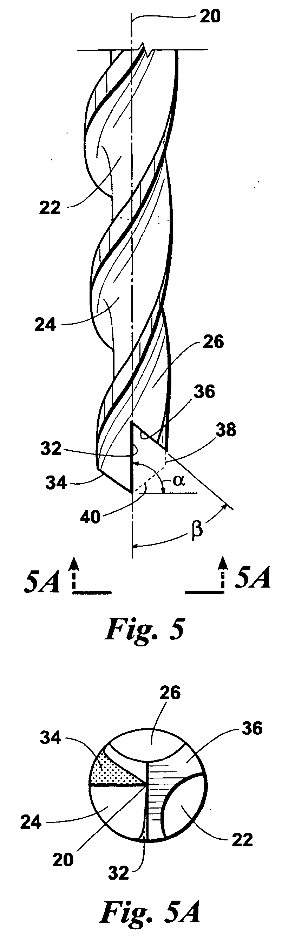

Figures 5 and 5A illustrate a tip 30 having a wedge-shaped portion 38 removed. Preferably, removed portion 38 does not extend past the central longitudinal axis 20 of the file 10. Portion 38 is defined by a first angle "α" and a second angle "β". Surface 36 and a significant portion of surface 32 no longer lie contiguous to an opposing lateral surface of the conical-shaped envelope 40 defining the original tip 30. The remaining portion of surface 32 retains its general triangular shape and intersects surface 36 to form a point at the center 20 of tip 30. Each surface 32 and 36 is contiguous to an opposing lateral surface of the conical-shaped envelope 40 defining the original tip 30.

While the preferred embodiments have been described with a certain degree of particularity, the phraseology and terminology employed were for purposes of description and not limitation. Many changes may be made in the details of construction and the arrangement of components without departing from the scope of this disclosure. An endodontic file 10 according to this disclosure, therefore, is limited only by the scope of the claims, including the full range of equivalency to which each element thereof is entitled.

## Claims

1. A dental instrument (10) for cleaning and shaping a root canal of a tooth comprising:
a longitudinal body (18) having a taper, a central axis of rotation (20), a plurality of helical-shaped flutes (22,24,26) with spiraled lands therebetween, and a guide tip (30); wherein
said guide tip (30) comprises a plurality of face surfaces (32,34,36); **characterised in that**
a first face surface (32) of said plurality of face surfaces (32,34,36) lies substantially contiguous to a lateral surface of a conical-shaped envelope (40), and a portion of a second face surface (34) of said plurality of surfaces (32,34,36) lies noncontiguous to a lateral surface of said conical-shaped envelope (40); and
wherein said first (32) and second (34) face surfaces intersect to form a guide point at an apex of said guide tip (30), said guide tip (30) being coaxial with said central axis of rotation (20).

2. A dental instrument (10) according to claim 1, wherein said conical-shaped envelope (40) shares an apex of said first face surface (32).

3. A dental instrument (10) according to claim 1 or claim 2 further comprising a portion of said second face surface (34) defined by a radius "r".

4. A dental instrument (10) according to any one of the preceding claims further comprising a portion of said second face (34) surface defined by an angle "α".

5. A dental instrument (10) according to any one of the preceding claims further comprising a portion of said second face surface (34) defined by an angle "β".

6. A dental instrument (10) according to any one of the preceding claims, wherein
said helical-shaped flutes (22,24,26) are substantially symmetrical; and
said conical-shaped envelope (40) is coaxial said central axis of rotation.

7. A dental instrument (10) according to any one of the preceding claims, wherein
the plurality of helical-shaped flutes (22,24,26) comprises three substantially symmetrical helical-shaped flutes (22,24,26);
said guide tip further comprises a third face surface (36) and said conical-shaped envelope (40) is coaxial said central axis of rotation (20); and
said third face surface (36) lies substantially contiguous to a lateral surface of said conical-shaped envelope (40).

## Patentansprüche

1. Dentales Instrument (10) zum Reinigen und Formen eines Wurzelkanals eines Zahns, welches aufweist:
einen länglichen Körper (18), der eine Verjüngung, eine Rotations-Mittelachse (20), eine Mehrzahl von schraubenförmigen Kehlen (22, 24, 26) mit spiraligen Stegen dazwischen sowie eine Führungsspitze (30) aufweist; wobei
die Führungsspitze (30) eine Mehrzahl von Stirnoberflächen (32, 34, 36) aufweist; **dadurch gekennzeichnet, dass**
eine erste Stirnoberfläche (32) der Mehrzahl von Stirnoberflächen (32, 34, 36) im Wesentlichen an eine Seitenoberfläche einer kegelförmigen Hüllkurve (40) angrenzt, und ein Abschnitt einer zweiten Stirnoberfläche (34) der Mehrzahl von Oberflächen (32, 34, 36) nicht an eine Seitenoberfläche der kegelförmigen Hüllkurve (40) angrenzt; und
wobei die ersten (32) und zweiten (34) Stirnoberflächen einander schneiden, um an einem Scheitel der Führungsspitze (30) einen Führungspunkt zu bilden, wobei die Führungsspitze (30) zur Rotationsmittelachse (20) koaxial ist.

2. Dentales Instrument (10) nach Anspruch 1, wobei die kegelförmige Hüllkurve (40) einem Scheitel der ersten Stirnoberfläche (32) gemeinsam ist.

3. Dentales Instrument (10) nach Anspruch 1 oder Anspruch 2, das ferner einen Abschnitt der zweiten Stirnoberfläche (34) aufweist, der durch einen Radius "r" definiert ist.

4. Dentales Instrument (10) nach einem der vorhergehenden Ansprüche, das ferner einen Abschnitt der zweiten Stirnoberfläche (34) aufweist, der durch einen Winkel "α" definiert ist.

5. Dentales Instrument (10) nach einem der vorhergehenden Ansprüche, das ferner einen Abschnitt der zweiten Stirnoberfläche (34) aufweist, der durch einen Winkel "β" definiert ist.

6. Dentales Instrument (10) nach einem der vorhergehenden Ansprüche, wobei
die schraubenförmigen Kehlen (22, 24, 26) im Wesentlichen symmetrisch sind; und
die kegelförmige Hüllkurve (40) zur Rotationsmittelachse koaxial ist.

7. Dentales Instrument (10) nach einem der vorhergehenden Ansprüche, wobei
die Mehrzahl von schraubenförmigen Kehlen (22, 24, 26) drei im Wesentlichen symmetrische schraubenförmige Kehlen (22, 24, 26) aufweisen;
die Führungsspitze ferner eine dritte Stirnoberfläche (36) aufweist und die kegelförmige Hüllkurve (40) zur Rotationsdrehachse (20) koaxial ist; und
die dritte Stirnoberfläche (36) im Wesentlichen an eine Seitenoberfläche der kegelförmigen Hüllkurve (40) angrenzt.

## Revendications

1. Instrument dentaire (10) pour nettoyer et mettre en forme un canal radiculaire d'une dent comprenant :
un corps longitudinal (18) présentant un évasement, un axe central de rotation (20), une pluralité de cannelures de forme hélicoïdale (22, 24, 26) avec des lèvres en spirale entre elles, et une pointe de guidage (30) ;
où
ladite pointe de guidage (30) comprend une pluralité de surfaces frontales (32, 34, 36) ; **caractérisé en ce que**
une première surface frontale (32) de ladite pluralité surfaces frontales (32, 34, 36) est essentiellement contiguë à une surface latérale d'une enveloppe de forme conique (40), et une partie d'une deuxième surface frontale (34) de ladite pluralité de surfaces (32, 34, 36) n'est pas contiguë à une surface latérale de ladite enveloppe de forme conique (40) ; et
où lesdites première (32) et deuxième (34) surfaces frontales se coupent pour former un point de guidage au niveau d'un sommet de ladite pointe de guidage (30), ladite pointe de guidage (30) étant coaxiale audit axe central de rotation (20).

2. Instrument dentaire (10) selon la revendication 1, dans lequel ladite enveloppe de forme conique (40) partage un sommet de ladite première surface frontale (32).

3. Instrument dentaire (10) selon la revendication 1 ou 2 comprenant en outre une partie de ladite deuxième surface frontale (34) définie par un rayon "r".

4. Instrument dentaire (10) selon l'une quelconque des revendications précédentes comprenant en outre une partie de ladite deuxième surface frontale (34) définie par un angle "α"

5. Instrument dentaire (10) selon l'une quelconque des revendications précédentes comprenant en outre une partie de ladite deuxième surface frontale (34) définie par un angle "β".

6. Instrument dentaire (10) selon l'une quelconque des revendications précédentes, dans lequel
lesdites cannelures de forme hélicoïdale (22, 24, 26) sont essentiellement symétriques ; et
ladite enveloppe de forme conique (40) est coaxiale audit axe central de rotation.

7. Instrument dentaire (10) selon l'une quelconque des revendications précédentes, dans lequel
la pluralité de cannelures de forme hélicoïdale (22, 24, 26) comprend trois cannelures de forme hélicoïdale essentiellement symétriques (22, 24, 26) ;
ladite pointe de guidage comprend en outre une troisième surface frontale (36) et ladite enveloppe de forme conique (40) est coaxiale audit axe central de rotation (20) ; et
ladite troisième surface frontale (36) est essentiellement contiguë à une surface latérale de ladite enveloppe de forme conique (40).
